Europäisches Patentamt

European Patent Office

Office européen des brevets

(11) Publication number: **0 031 710**
A1

# EUROPEAN PATENT APPLICATION

(21) Application number **80304682.0**

(22) Date of filing **22.12.80**

(51) Int. Cl³: **B 61 L 3/00**, B 60 L 15/20

(30) Priority: **31.12.79 US 108740**

(43) Date of publication of application: **08.07.81**
**Bulletin 81/27**

(84) Designated Contracting States: **DE GB IT**

(71) Applicant: **WESTINGHOUSE ELECTRIC CORPORATION**, Westinghouse Building Gateway Center, Pittsburgh Pennsylvania 15222 (US)

(72) Inventor: **McDonald, Michael Peter**, 404 South Linden Avenue, Pittsburgh Pennsylvania (US)

(74) Representative: **van Berlyn, Ronald**, 23 Centre Heights, London NW3 6JG (GB)

(54) **Transit vehicle deceleration control system and method.**

(57) A control system for controlling the deceleration of a transit vehicle which is operative with a roadway track, in response to a change in the input desired speed signal considers passenger-comfort during deceleration. After a change in the input command speed signal from the roadway track, it is desired to establish a service brake rate that will provide adequate deceleration for the vehicle to stay under the safety profile, and secondly to optimize the comfort and to limit the jolting of passengers, particularly the standing passengers.

1

TRANSIT VEHICLE DECELERATION
CONTROL SYSTEM AND METHOD

This invention relates generally to transit vehicle control, and more particularly to improved method and apparatus for braking of transit vehicles.

Two common methods of controlling transit vehicle braking at the present time are open loop braking and closed loop braking. Open loop braking is generally used for steel wheel transit vehicles operating with steel tracks, where the available rail to wheel friction and the ability to climb steep grades are limited and usually results in a complex electronic control package for propulsion and brake control on each car, such as described, for example, in an article published in Railway Signaling and Communications for July 1969 at pages 27 to 38. Closed loop braking is generally used for transit vehicles operating with rubber tires on concrete tracks, where the available wheel to running surface adhesion is extremely high for dry track conditions, the feedback control is usually provided by a vehicle actual velocity signal from a tachometer and/or a vehicle deceleration signal from a pendulum accelerometer operative with a switch in the brake circuit to release the brakes when the deceleration becomes excessive, such as described in an article published in the Westinghouse Engineer for January 1971 at pages 8 to 14. The open loop system is more compatible with brake systems having slow response times greater than one half second, but fine calibration is required. The closed loop system is more generally operative with a more coarse brake calibration, but a faster responding brake system is required.

It is known in the prior art to control the deceleration of a rubber tire transit vehicle as discussed in an article published in March, 1978 by T. C. Selis at the Conference of the 28th IEEE Vehicular Technology Group in Denver, Colorado.

It is also known in the prior art to control the deceleration of a transit vehicle by providing a closed loop acceleration control system, which compares a non-linear desired deceleration signal with a feedback actual deceleration signal, as described in U.S. Patent 3,519,805 of G. M. Thorne-Booth.

For transit vehicles, e.g., vehicles with rubber tires, when the input desired speed command to the transit vehicle from the roadway track is reduced to result in the vehicle going from a constant velocity speed maintaining mode of operation to a brake mode, for particularly vehicles with air brakes there is a problem of slow and non-linear brake control-response, affecting the comfort of the vehicle passengers. When the effort-request-signal herein referred to as the P-signal controlling traction drops in value from a speed maintaining value, such as 70 milliamps to a braking value such as 42 milliamps, or, for instance, to below 20 mA, the degree of drop depending on vehicle-overspeed conditions, the arrangement described hereinafter provides a tractive effort request control P signal that varies in accordance with a predetermined non-linear ramp function to establish a brake pressure for open loop control of the brake operation during an initial predetermined time period. Thereafter, a closed loop brake control is provided in accordance with a speed error that is determined between the actual speed feedback and the input desired speed to control the brake operation. The initial predetermined time period is associated with the desired jerk limit; the objective during this time is to provide substantially linear application of the brakes based on prior information stored from previous stops and in a manner comfortable to the passengers. Normal closed loop control is not effective during this initial brake application because of physical limits due to time delays, etc.

The present invention in its broad form consists in a control system for a transit vehicle operative with a roadway track for controlling the deceleration of the vehicle in response to a change in an input desired speed signal, the combination of: means coupled with the vehicle for providing an actual speed signal; means responsive to said change in the desired speed signal for providing a first tractive effort request signal having a predetermined characteristic; means responsive to the difference between the actual speed signal and the desired speed signal for providing a second tractive effort request signal; means controlling the deceleration of the vehicle in response to the first tractive effort request signal for a predetermined time period following said change in the desired speed signal and controlling the deceleration of the vehicle in response to the second tractive effort request signal after that predetermined time period.

A more detailed understanding of the invention can be had from the following description of a preferred embodiment, given by way of example and to be studied in conjunction with the accompanying drawing in which:

Figure 1 shows a prior art transit vehicle operative with a roadway track including a plurality of fixed signal blocks, however, it is also known to provide block systems which differ from fixed signal blocks;

Figure 2 shows a prior art open loop brake control system for a transit vehicle;

Figure 3, including Figures 3A to 3C, illustrates the operation of the open loop brake control system of Figure 2;

Figure 4 shows a prior art closed loop brake control system for a transit vehicle;

Figure 5, including Figures 5A to 5D, illustrates the operation of the closed loop brake control system of Figure 4;

Figure 6 shows the theoretically desired acceleration and deceleration curve for a transit vehicle in response to a change in the command speed received by the vehicle;

Figure 7A shows theoretically desired jerk limit curve with provision made for the comfort of passengers where acceleration and deceleration changes occur; and;

Figure 7B shows an alternate theoretically desired curve if rate of change of jerk limit is also considered;

Figure 8 shows the previously realized actual control of a transit vehicle in relation to the curve of Figure 6;

Figure 9 shows a nominal non-linear P signal versus deceleration rate transfer function that is to be used for control of a closed loop brake control system of the preferred embodiment described herein;

Figure 10 shows the required jerk limited brake application in accordance with Fig. 6, and shows the corresponding relationship of P signal variation with time as derived from the curves shown in Figures 6 and 9;

Figure 11 shows the closed loop brake control system with adaptive learning that can be applied to the preferred embodiment;

Figure 12 shows the typical range of average brake cylinder air pressure values in relation to a propulsion signal hereinafter called the P signal;

Figure 13 shows the typical range of average vehicle deceleration as a function of brake pressure with the range shown being for a nominal car weight and the variation is predominantly from differences in the brake lining characteristics;

Figure 14 shows the average values of vehicle deceleration as a function of P signal for a nominal car weight;

Figure 15A illustrates the range of actual deceleration as a function of deceleration request without adaptive learning;

Figure 15B illustrates the reduced range of actual deceleration versus deceleration request with adaptive learning provided by the described embodiment;

Figure 16 illustrates the improvement in brake control system operation provided by the preferred embodiment described herein;

Figure 17 shows a modification of the present invention, where the vehicle acceleration is utilized to determine the operation of the over speed safety control; and

Figure 18 shows a practical embodiment of the present transit vehicle deceleration control system and method.

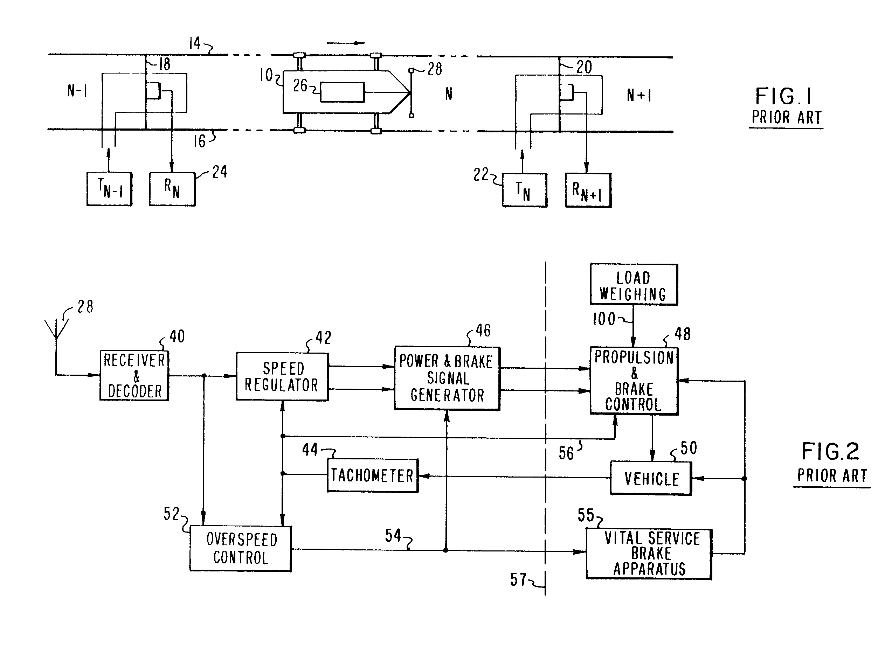

As shown in Figure 1, it is known in a prior art to operate a transit vehicle 10 along a roadway track including rails 14 and 16, which track can be divided into signaling blocks N-1, N and N+1 and so forth by low impedance conductors such as connections 18 and 20 between the rails 14 and 16 at the ends of each signaling block. A signal transmitter 22 is operative with one end of block N at a selected frequency and cooperative with a signal receiver 24 at the other end of signal block N for determining occupancy and controlling the propulsion and braking of transit vehicle 10 located within signal block N, as described in U.S. Patents No. Reissue 27,462; 3,532,877; and 3,593,022. A published article in the September 1972 issue of the "Westinghouse Engineer" at pages 145 to 151 discloses this operation of a transit vehicle, such as the transit vehicle 10, which carries a vehicle control system 26 coupled with a signal antenna 28 and operative with the vehicle motors and the vehicle brakes.

As shown in Figure 2, it is known in the prior art for the vehicle control system 26 to include a signal receiver and decoder 40 which senses a command or desired speed code signal from the antenna 28. This desired speed signal is applied to a speed regulator 42 and compared with the actual speed signal feedback from the tachometer 44 operative with the vehicle wheels. A speed error signal is provided to a tractive effort control P and brake signal generator 46 for determining the operation of the propulsion and brake control 48, in relation to acceleration of the vehicle by the propulsion motors or deceleration of the vehicle by the brakes and motors within the vehicle 50 including the motor and brake apparatus. If the actual speed of the vehicle 50 is less than the desired speed then propulsion effort is requested, and if the actual speed is greater than the desired speed then brake effort is requested. In addition a vital or fail-safe overspeed control 52 responds to the desired speed signal from the receiver and decoder 40 and to the actual speed signal feedback from the tachometer 44 for supplying an enable signal 54 to provide a safety innerlock, such that when the transit vehicle 50 is operating above a predetermined safe system input command speed for the particular signal block occupied by the vehicle then the enable signal 54 is no longer provided and a full service brake operation for the vehicle is applied by the vital service brake apparatus 55. The apparatus shown to the left of the dotted line 57 is carried by the controlling car of a train of vehicles, and the apparatus shown to the right of the dotted line 57 is provided for each vehicle or car of the train.

In general when the P signal has a value from 100 milliamps down to 60 milliamps a propulsion tractive effort for vehicle acceleration is requested, and from 60 milliamps down to 20 milliamps a brake tractive effort for vehicle deceleration is requested. When the P signal goes to 60 milliamps the brake controller portion of the propulsion and brake control 48 is assumed to apply a nominal brake effort determined by pressure to the disc or drum brakes of the vehicle, which can be in conjunction with dynamic or regenerative electric braking as well known to persons skilled in this art. The propulsion and brake control 48 can respond to the vehicle actual velocity signal 56 for adjusting somewhat to differences in coefficient of friction due to brake shoe temperature, contamination, humidity, drum condition and so forth.

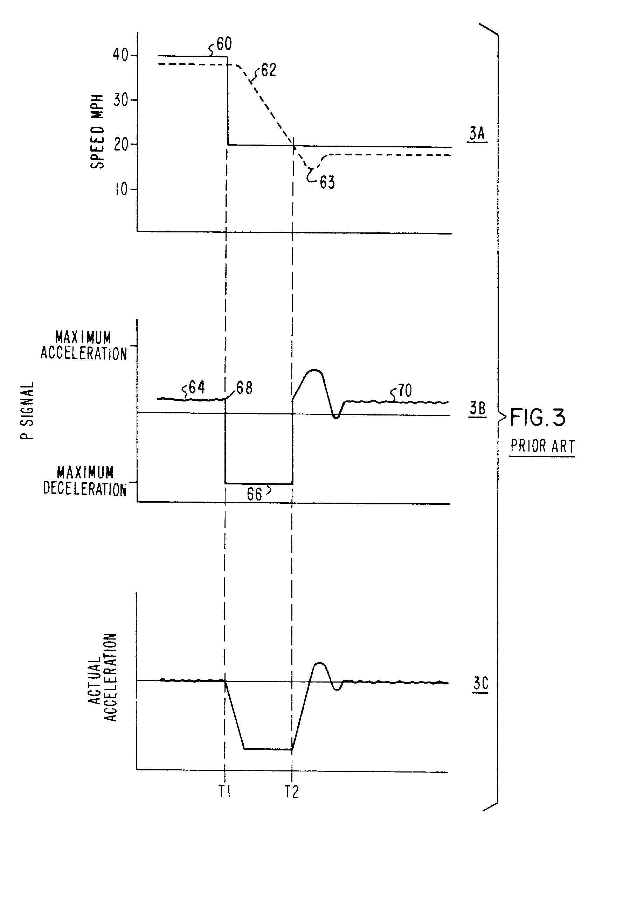

In Figures 3A, 3B and 3C, there is illustrated the operation of the open loop brake control system of Figure 2 and such as is used with steel wheel systems, where the provided effective vehicle deceleration is very carefully controlled in relation to the value of the P signal. In Figure 3A there is shown in curve 60 a change in the safe operation decoded input command speed from 40 miles per hour to 20 miles per hour for system safety reasons, and typically which occurs when the vehicle goes from one signal block into another signal block of the roadway track. The actual vehicle speed is shown by curve 62 during the requested speed change. The corresponding P signal is shown by Figure 3B to go from some level 64 required to overcome friction when the actual speed is below or at the command speed, and at time T1 the overspeed safety circuit operates to open the P signal line and the P signal goes to a full service brake level 66 without consideration of jerk-limiting. Jerk-limiting required for passenger comfort is achieved in the propulsion and brake controller 48 shown in Figure 2. When the overspeed condition no longer prevails at time T2 the P signal is enabled and the P signal increases back up to a propulsion tractive effort level 70 required to overcome friction. If the speed operation of the vehicle is aimed at a nominal underspeed such as 2 miles per hour under the input speed command, then as the actual speed 62 crosses the 20 miles per hour input speed command 60, the vehicle is still in full service brake and has to make the transition out of full brake and into minimum propulsion and then up to the propulsion effort 70 required to overcome friction. Unless the brakes are operationally very fast and not overridden by a slow jerk limit, there is a tendency for the brake effort to undershoot the actual speed of the vehicle as shown by curve portion 63 in Figure 3A and the P signal correspondingly increases as the resulting speed error gets larger and is then brought into agreement as the vehicle actual velocity approaches the input command or desired speed.

Figure 3C shows the vehicle acceleration change at time Tl when the input speed command changes from 40 miles per hour to 20 miles per hour and the P signal drops to 20 milliamps or below, and deceleration increases with time at the provided jerk limit rate until it gets to a nominal system deceleration rate which, for example, is about 3 miles per hour per second for the BART transit system in San Francisco and is about 1.2 meters per second per second for the Sao Paulo Metro System in Brazil for normal rail-wheel adhesion. This is the preferred service brake rate, and this is then held substantially constant until time T2 when the actual speed is the same as, or less than, the new command speed and the P signal increases up to the substantially constant velocity mode of vehicle operation. The actual acceleration shown in Figure 3C is jerk-limited from maximum service brake up to some overshoot to get the vehicle back up the required velocity and then the acceleration becomes more or less zero in value.

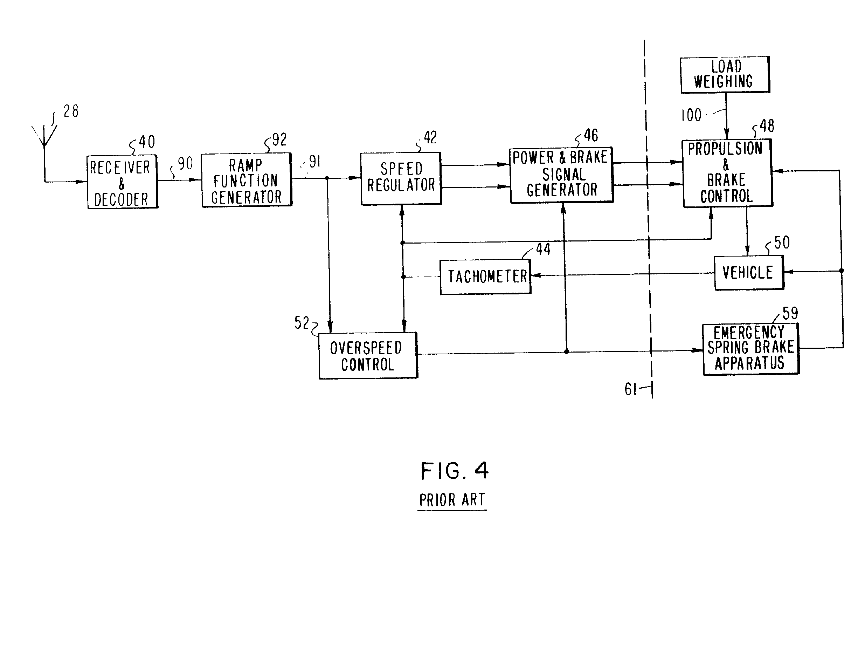

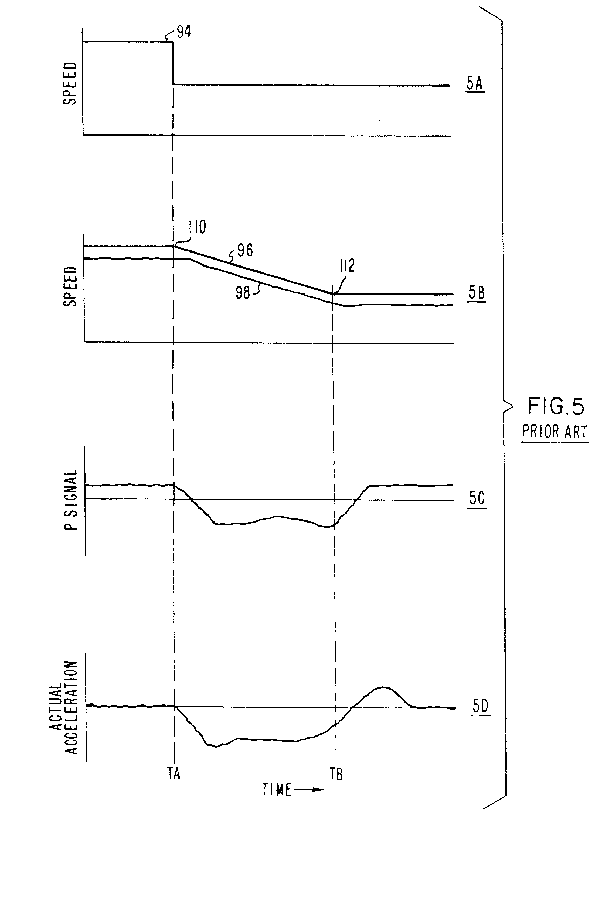

In Figure 4 there is shown a prior art closed loop transit vehicle brake control system, which does not attempt to correct for nonlinearities of the brake system, and which is typical for a rubber tired transit vehicle having a relatively slow air brake response. The decoded input command speed signal 90 from the antenna 28 and the receiver-decoder 40 is supplied to a ramp function generator 92, such that as the input speed command changes for example from 40 to 20 miles per hour as shown by curve 94 in Figure 5A, instead of the brake control system following a step function change in the vehicle desired speed, the speed reference 91 is applied to the speed regulator 42 and follows the curve 96 of Figure 5B and the actual vehicle speed is in accordance with the curve 98. Provision can be made for a load weighed input 100 such that the brake pressure applied in response to the P signal is scaled in accordance with the weight of the car and the number of passengers in the car, but no corrections are made for any performance differences resulting from worn brake shoes, humidity, temperature, condition of brake drums/discs and so forth. The ramp in accordance with curve 96 shown in Figure 5B provides a vehicle deceleration that is comfortable for the passengers and it can typically be in the order of two miles per hour per second. The deceleration rate provided by the ramp generator 92 is approximately equal to the difference between the input speed commands divided by the time interval, and considering the times required for jerk limiting. The speed regulator 42 and the P and brake signal generator 46 try to vary the P signal to follow the curve 96. The propulsion and brake control 48 can be adjusted such that 20 milliamps of P signal will give a nominal vehicle deceleration brake rate of 5 miles per hour per second, which in actual practice might vary from 3 miles per hour per second with brake shoes having a low coefficient of friction up to a high of 6 miles per hour per second. The control apparatus shown to the left of dotted line 61 is provided for the controlling car in a train, and the control apparatus shown to the right of dotted line 61 is provided for each car of the train.

The brake system used for open loop control of Figure 2 provides more sophisticated brake control operation, and gives a desired brake rate within plus or minus 10 percent, but the brake system used for closed loop control can have a greater variation usually for economic reasons. The closed loop system of Figure 4 varies the P signal as required and as shown in Figure 5C such that any nonlinearities in the brake system are partially corrected. Therefore, in theory, if the P signal is at 60 milliamps at time TA and the slope of the ramp shown by curve 96 is two miles per hour per second such that a change of 20 miles per hour in command speed would require about 12 seconds of brake effort, when the command speed goes from 40 miles per hour to 20 miles per hour as shown by curve 94 the P signal shown by Figure 5C will start ramping down from 60 milliamps toward 20 milliamps, which would be the maximum brake condition and for a particular vehicle, the P signal may go down to about 43 milliamps and remain there until going back into speed maintaining as shown in Figure 5C. The corresponding deceleration is shown in Figure 5D going down to about minus 2 miles per hour per second and then back into speed maintaining. The tachometer feedback indicates when sufficient braking or too much braking effort takes place, and the P signal is adjusted as required in an effort to provide a speed error of zero or some predetermined aiming difference between the input command speed and the actual speed of the vehicle.

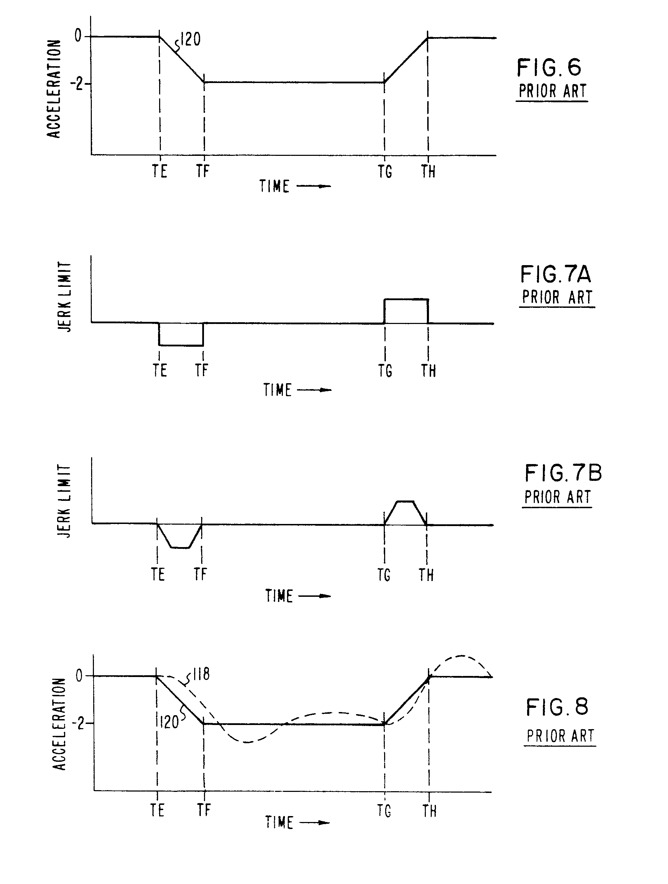

In consideration of the comfort of vehicle-passengers, the theoretical desired acceleration and deceleration relationship would be as shown in Figure 6, with an acceleration of zero until the command speed change at time TE and changes at a jerk rate of one mile per hour per second squared until the desired brake rate of minus 2 miles per hour per second squared is reached. This is then maintained until the command speed approaches the actual speed and would then follow the jerk rate of 1 mile per hour per second squared back to the zero acceleration condition.

In Figure 7A, there is shown a jerk limit curve derived from the acceleration curve as Figure 6, with the ramp curve being provided with comfort limit rounded corners 110 and 112 of Fig. 5B. Where acceleration and deceleration changes occur at a fixed jerk rate the corners can be mathematically expressed as a cubic relationship. The acceleration curve shown in Figure 7A will in theory provide the vehicle passengers with an acceptable ride. The ride can be further improved by considering a finite rate of change of jerk as shown in Fig. 7B. This can be mathematically expressed as a quartic relationship.

In practice the brake control can tend to get behind as shown by dotted curve 118 in Figure 8. So the ideal deceleration is not provided and brake overshoot can occur, which requires additional braking effort to get back on the desired acceleration curve 120, so the deceleration rate 118 can go lower than minus 2 miles per hour per second squared and then eventually gets back more or less in accordance with the desired curve 120 until it is time to come out of braking and the control gets behind and overshoots into propulsion. The overshoot can be reduced by making the servoloop compensation within the P signal generator have more gain, because more gain provided for the speed error and its effect on the P signal value permits a better correlation between the actual acceleration curve 118 and the desired acceleration curve 120 shown in Figure 8. In this way a smaller level of speed error results in a bigger and faster change in the P signal, but the practical limitations here are the operational delays in the brake system response and avoiding unstable oscillation.

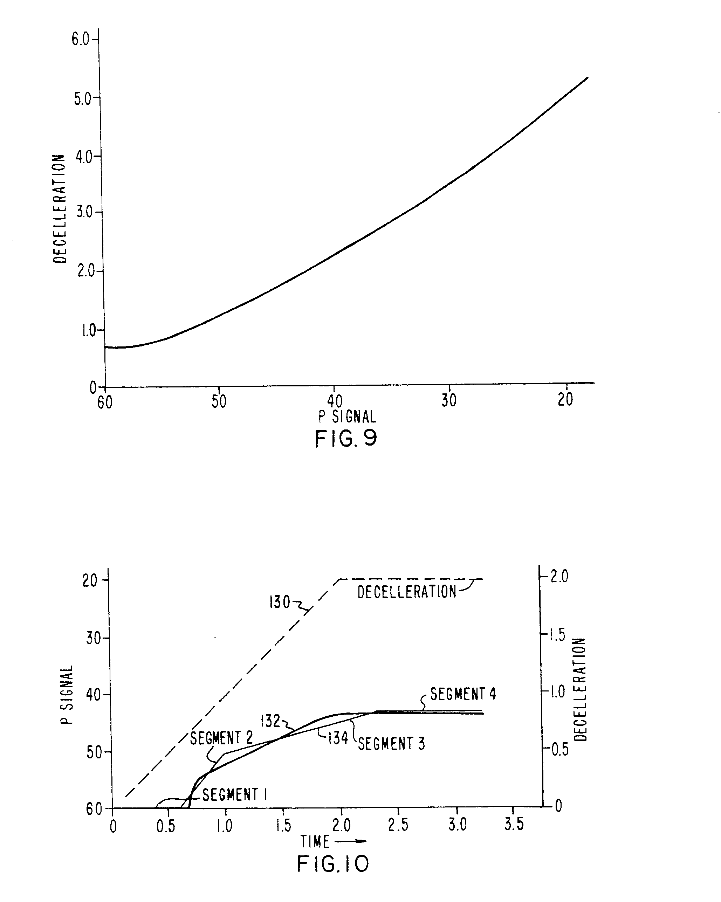

As shown in Figure 9, there is a non-linear relationship between the value of actual deceleration and the P signal. If the relationship is assumed to be linear for the purposes of servo control, additional problems occur in following the commanded response as shown in Figure 8. Also, the non-constant gain characteristic of the actual deceleration: P signal transfer function compounds the problem of providing a servo control with small errors. The high gain requirement coupled with the gain

**0031710**

variations in the closed loop, as noted in Figure 9, make stabilization of the system difficult. Figure 10 shows in curve 130 the required deceleration as a function of time for the transition from speed maintaining into brake. The relationship of curve 132 results from obtaining the corresponding P signal variation with time from Fig. 9. Note that there is an initial "dead band" up to approximately 0.7 seconds since the friction effects alone can provide a deceleration of 0.7 mph/s, in this dead band the P signal remains at 60 A. After 0.7 seconds, the P signal is required to decrease in a non-linear fashion to a value of 43 mA giving the required brake rate of 2 mph/sec. To avoid the difficulties posed by following curve 132 of Figure 10 in a closed loop system, the present invention proposes to employ a forcing function to make the transition into and out of brake. A nominal forcing function will be stored, such as in a microprocessor memory as a look up table or other algorithm, and during the jerk limit transitions the P signal will be commanded to a specific value as a function of time elapsed. At the end of the jerk limit deviation, in this case two seconds, and when the P signal is at 43 mA, the system is allowed to revert to the closed loop control and the brake rate maintained by regulating the P signal freely as a function of speed error as well known to persons skilled in this art. As the vehicle approaches the new speed requirement the same forcing function may be used (in reverse) to make the transition from brake of 2 mph/s to zero brake and speed maintenance by applying sufficient propulsion effort to overcome friction, grade and so forth. A similar two second interval can exist where closed loop control is overridden by the forcing function of the present invention. Once a nominal non-linear transfer function is determined, as shown in curve 132 of Figure 10, It may be approximated by a series of straight lines as shown by curve 134 in Figure 10. For ease of hardware implementation curve 134 of Figure 10 shows a four segment straight line approximation.

Since Fig. 10 represents a nominal case only, the actual vehicle performance can be improved by adaptive learning and modification of the nominal algorithm. The nominal non-linear relationship of curve 134 of Fig. 10 is determined from a representative sample of vehicle characteristics for a specific car weight. In the adaptive learning the nominal curve 134 is modified by the load and stored data or previous recent performance.

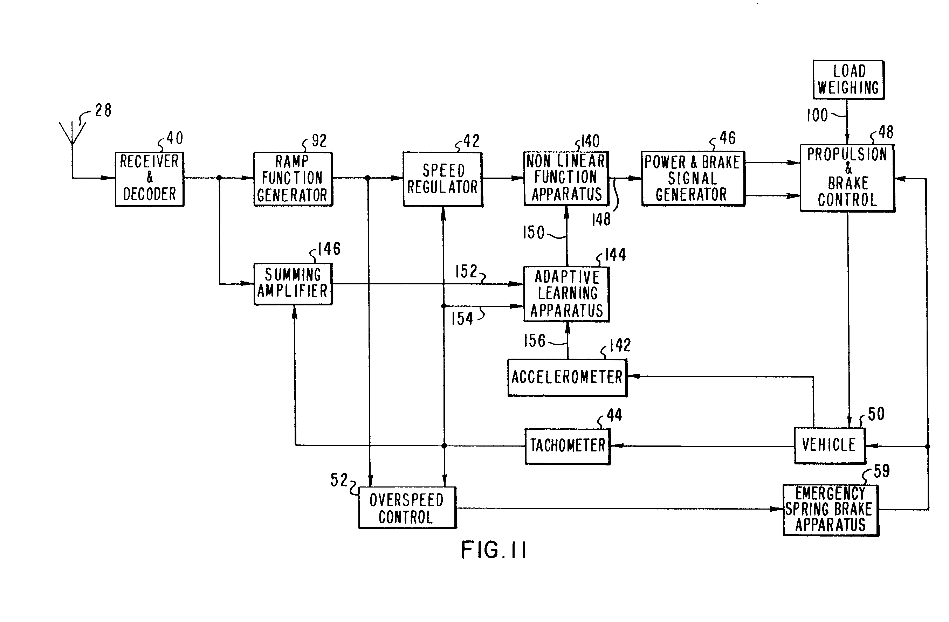

In Figure 11 there is shown a brake control system in accordance with the present invention. A comparison of the brake control system shown in Figure 11 with the prior art brake control system shown in Figure 4 shows that the non-linear control apparatus 140 has been included between the speed regulator 42 and the P and brake signal generator 46, an accelerometer 142 has been provided to sense the acceleration or decleration of the vehicle 50 and an adaptive learning control apparatus 144 has been added in conjunction with a summing amplifier 146 responsive to the analog speed command from the receiver and decoder 40 and the actual vehicle speed signal from the tachometer 44. The output signal from the non-linear control apparatus is the tractive effort request signal 148 proportional to desired vehicle acceleration tractive effort in the propulsion mode and proportional to desired vehicle deceleration tractive effort in the braking mode. The non-linear function generator 140 can include a stored look up table in the memory of a microprocessor or an sample hold memory and amplifier diode non-linear device in hardware apparatus and is operative to provide in effect a gain modified P signal level request 148. The adaptive learning apparatus 144 responds to the speed error 152, the vehicle actual velocity 154 from the tachometer 44 and the vehicle rate of acceleration 156 from an accelerometer 142, and provides a gain modifier 150 for correction of the brake pressure control signal in relation to each value of the P signal, in accordance with a modification or correction ratio of the actual decelera-

14 0031710

tion of the vehicle as compared to the desired deceleration of the vehicle in relation to the known P signal that was controlling the vehicle braking rate when the above measurement was made, to provide a correction for non-linearities of the brake system operation.

A decrease change in the input speed command signal 94 as shown in Figure 5A would provide an enable signal to initiate a predetermined time period, such as the first two seconds, after a change in the input command speed occurs. During this predetermined time period the feedback actual speed signal from the tachometer would be ignored except for overspeed control, and at the end of this first two second time period, the closed loop brake control system shown in Figure 11 would go back to its normal speed regulating function to determine a speed error and establish a P signal value in accordance with that speed error. The adaptive control apparatus 144 can be provided with the control relationship as generally shown in Figures 9 and 10 being stored as one or more look up data tables in a suitable memory. As the vehicle travels along the roadway track under the control of the control relationship shown in Figures 9 and 10, after a downward change in speed command signal is sensed, the resulting P signal level and the resulting brake rate can be stored for the purpose of updating and improving the previously determined braking control ramp. A nominal control ramp can be initially used for controlling the initial braking runs of the vehicle, while measuring data for the P signal, actual vehicle velocity and deceleration from an accelerometer device.

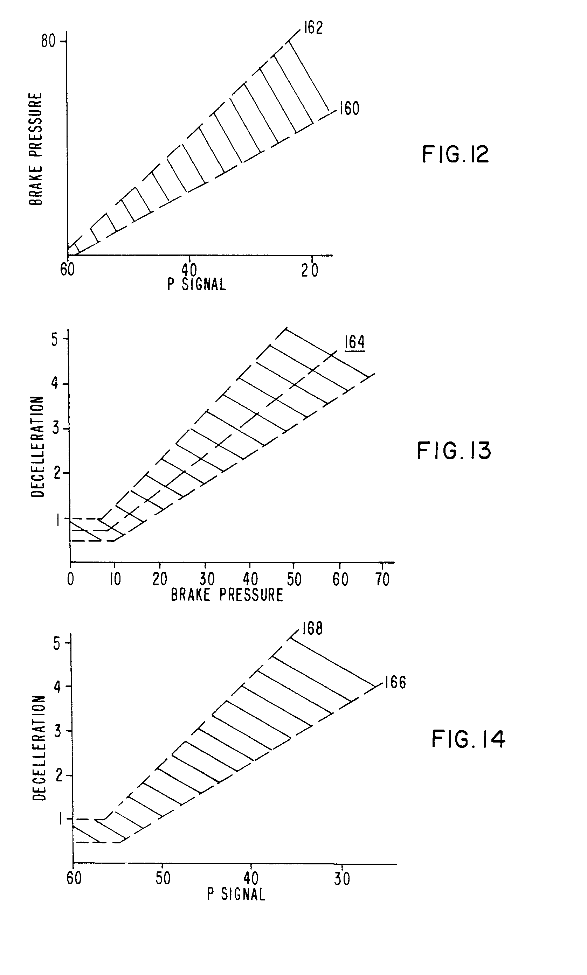

The initial control value of the brake pressure, as a function of the braking range of the P signal values from 60 milliamps to 20 milliamps, is initially established for a reasonable number of transit vehicles operational with the roadway track under the normal and usual conditions of atmospheric humidity, temperature, track surface and the like. An average curve of these initial values could be established such as shown in Figure 12, with the curve 160 representing the average brake pressure values for an empty vehicle and the curve 162 representing average brake pressure values for a fully passenger loaded vehicle. The curve 164 in Figure 13 shows measured average values of brake pressure needed to provide specific values of vehicle deceleration, and corresponding with the curve 160 relating the average brake pressure values with the P signal values. The adaptive control apparatus 144 can read the P signal value at predetermined time intervals and read the related values of the P signal and the vehicle deceleration. For example, if the P signal is 32 milliamps, a brake pressure of 17 pounds per square inch could be provided to the brake pressure servo. The learning update takes place after sensing the resulting vehicle velocity 154, which velocity can be differentiated to establish vehicle deceleration or an accelerometer 142 can be provided for this purpose. If the vehicle does not slow down enough as desired in response to the P signal of 32 milliamps, the brake servo loop will provide a decreased P signal to some value such as 28 milliamps to ask for more brake effort and an increased brake pressure such as 21 pounds per square inch will now be provided to the brake pressure servo to obtain the desired additional brake effort.

In Figure 14, the curve 166 illustrates the minimum values of vehicle deceleration as a function of the load weighed P signal, and curve 168 illustrates the maximum values of deceleration.

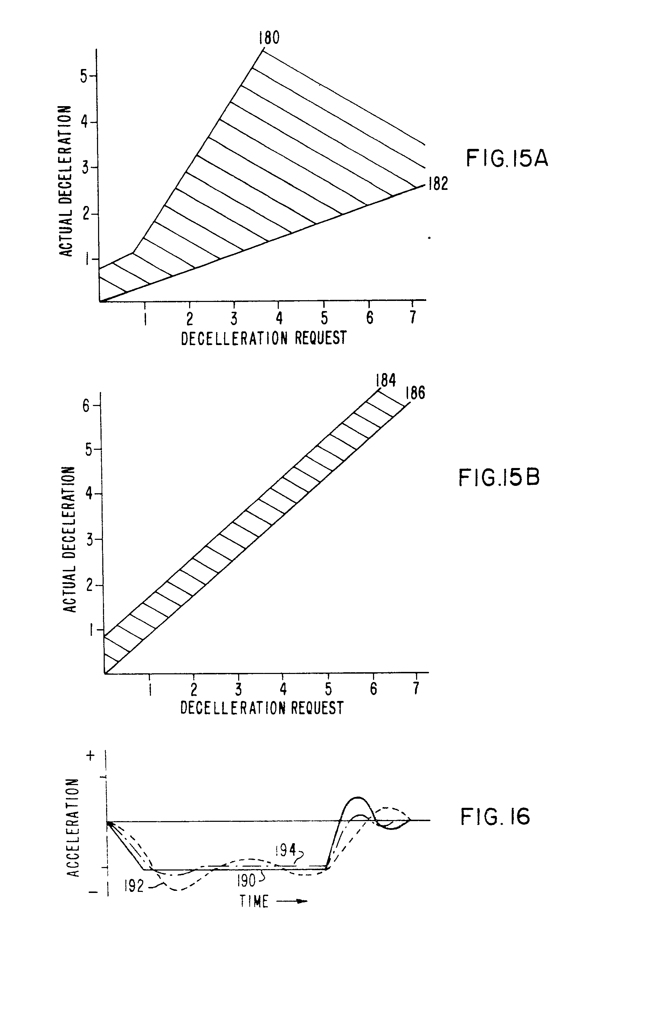

In Figures 15A and 15B there is illustrated a vehicle linear deceleration modification and operational improvement that would result with the brake control shown in Figure 11. The curves 180 and 182 of Figure 15A illustrate the range of mean values used for the nominal curve for initial vehicle operational conditions and before adaptive learning experience. The curves 184 and 186 of Figure 15B illustrate the reduced range of these mean values after adaptive learning experience and provided by the adaptive control apparatus 144 as shown in Figure 11.

In Figure 16 there is shown the improvement in vehicle operation resulting from the present invention. The curve 190 illustrates the operation of the prior art open-looped brake control system shown in Figure 2. The curve 192 illustrates the operation of the prior art closed loop brake control system shown in Figure 4. The curve 194 illustrates the improved operation of the brake control system in accordance with the present invention and as shown in Figure 11.

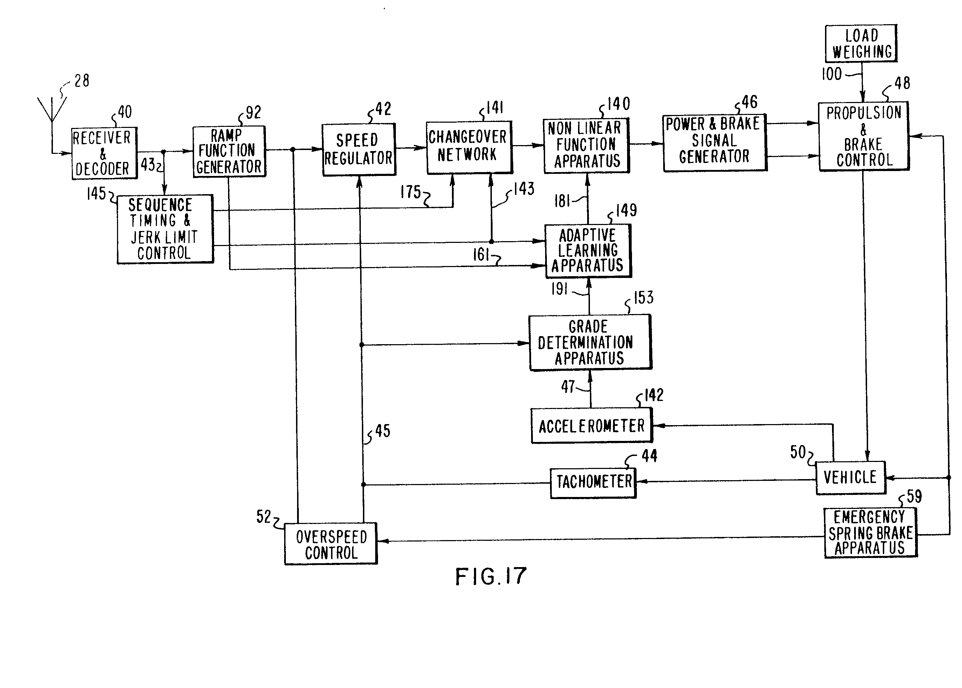

In Figure 17 there is shown a modification of the brake control of the present invention as shown in Figure 11.

The curves 180 and 182 of Figure 15A show the nominal and initial vehicle brake control operation. Because of variations in the brake characteristics of a particular vehicle or train of vehicles, the detected actual deceleration will likely be different than the requested deceleration. For the last brake operation of the vehicle, the P signal was known to be chosen to have a selected value to provide a desired brake effort. The prior art assumption was that the P signal is proportional to brake rate, and if this control operation is followed, the transition into and out of brake operation as shown by Figure 10 involves a dead zone and a non-linear relationship. The present invention provides a brake control operation having a predetermined jerk limit rate during an initial time period of the first two seconds of brake operation when an open loop brake control is provided. The closed loop brake control of Figure 4 cannot utilize the required high gain because of instability problems due to inherent time delays and the like during this initial time period of two seconds, and such a utilization will then overcompensate to give an objectionably high jerk rate or a too high deceleration might result. Thusly, a forcing function determined by the jerk limit requirements is applied in accordance with the present invention for this initial time period in an effort to brake the vehicle in a linear manner from zero deceleration to a desired deceleration of two miles per hour per second.

Because of the non-linearities shown by Figure 10 and the dead zone, it is difficult to provide the desired brake control with a closed loop brake control system in the time that is available. Therefore, an open loop brake control system is provided for an initial two second time period, as determined by the time relationship of the curve shown in Figure 10 to approach the more-or-less linear portion of that curve, and the P signal is forced to arbitrarily follow the general curve for that initial time period. After that initial time period, the P signal is regulated subsequently by the normal closed loop brake control system operation to whatever modified value will provide the desired vehicle deceleration, which modified value is stored in a memory. For the next and second brake control of the vehicle, the modified value is used to change the brake control operation during the initial two second time period, such that the P signal at the end of the second brake control operation is at or closer to the curve shown in Figure 10. If the return to closed loop brake control at the end of the second initial time period provides a P signal that gives the desired vehicle deceleration, the subsequent brake control operations can utilize the same modified value of the P signal, until an undesired difference occurs between the resulting actual deceleration and the requested deceleration of the vehicle.

The brake control operation of the present invention can be applied also when the vehicle is coming out of a brake control operation. Coming out of a brake control operation is less difficult because there is no start-up dead band, such as shown in Figure 10. It is desired when coming out of brake control and going into speed maintaining to take off the brake control and reduce vehicle deceleration before actually arriving at the speed maintaining operation, such that an undershoot of the latter can be avoided. A similar forcing function can be established to permit the required deceleration reduction to have the vehicle at substantially zero deceleration when the speed maintaining operation is reached.

In Figure 17 there is shown a modification of the present closed loop brake control with adaptive learning as shown in Figure 11. A changeover network 141 responds to a two second enable signal 143 from the sequence timing and jerk limit control 145 for providing an open loop control of the vehicle brake operation, with a jerk limited request signal 145 passing through the changeover network 141 and the nonlinear function generator 140 to establish the P signal level to the P and brake signal generator 46. The two second enable signal 143 is also supplied to the adaptive learning apparatus 149, which responds to each of the grade signal 191 from the grade determination apparatus 153, the ramp active signal 161 from the ramp generator 92 and provides a gain modification signal 181 to the nonlinear function generator apparatus 140.

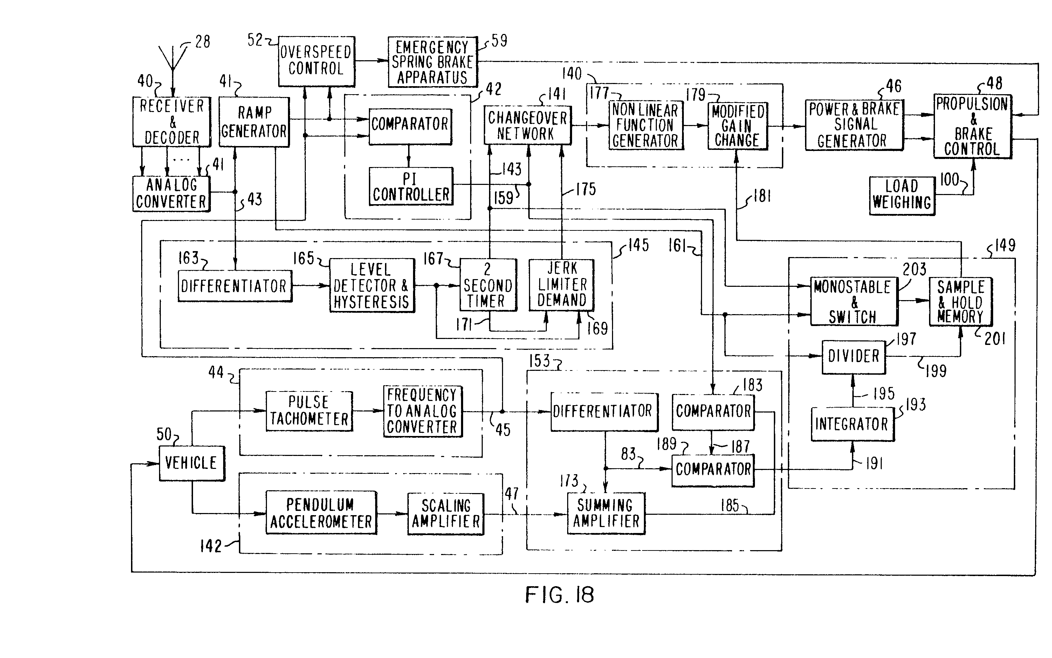

In Figure 18 there is shown in greater detail a practical embodiment of the present deceleration control apparatus of Figure 17. The speed code receiver and decoder 40 provides a decoded command or desired speed signal to an analog converter 41 which is scaled to output the analog desired speed command signal as well known to persons skilled in this art. The ramp generator 92 converts the step function analog speed command into a ramp signal having a desired ramp rate. The speed regulator 42 includes the well-known comparator to develop a speed error and a Proportional-Integral (PI) controller for desired servo control compensation to convert the speed error into a requested deceleration. The output from the speed regulator 42 is a requested deceleration signal 159 when in the brake mode of operation. The ramp generator 92 is provided with an additional amplifier having some hysteresis to determine when the ramp is active and the output signal is on the ramp and which provides a ramp active signal 161 to indicate that a command speed change is taking place.

The pulse tachometer 44 includes a frequency to analog converter for determining the average value of the pulse waveform and a low pass filter to give the vehicle analog actual speed signal 45. The pendulum accelerometer and scaling amplifier provide the vehicle analog actual acceleration signal 47.

To indicate when the command speed has changed, the analog speed command 43 goes to a differentiator 163 and a level detector with hysteresis 165 for noise insensitivity which gives an output when the speed code changes. The two second timer 167 is a monostable circuit to stretch the output pulse signal from the level detector 165 for a time duration of two seconds to provide the two second enable signal 143. It is within the scope of the present teachings to provide a time duration as may be required in accordance with the empirically established brake operation characteristic curve, such as curve 132 shown in Figure 10, for the particular vehicle to be controlled.

The two second time duration is here selected in relation to the P signal value reaching the substantially horizontal portion of that characteristic curve in about a two second time period. The jerk limiter demand 169 is a non-inverting operational amplifier and generates a ramp deceleration request going from zero deceleration to a minus two miles per hour per second in the two second time period of the enable signal 143. At the end of the two second enable, a reset signal 171 is supplied to the jerk limiter demand 169.

The tachometer 44 coupled with the vehicle wheels measure linear deceleraton and this is compared to the output of the pendulum accelerometer in summing amplifier 173 to determine the track grade.

The ramp active signal 161 provides an indication for the duration of the vehicle going from one speed command to another speed command in relation to the difference between the speed commands. For example, if the speed command change is from 40 miles per hour to 20 miles per hour, this step change in speed command will initiate the two second timer 167 to provide the enable signal 143 for a time period of two seconds, but the ramp active signal 161 will be provided for about 11 or 12 seconds since it takes 10 seconds at the desired two miles per hour per second deceleration rate to go from 40 to 20 and the extra time depends upon the jerk limit rate. The ramp active signal 161 depends on the difference between the old and the new speed commands.

The requested deceleration 159 from the speed regulator 42 goes to a changeover network 141, which can comprise a relay having one normally open contact and one normally closed contact. The two second enable signal 143 operates the relay to switch from the requested deceleration 159 on the normally closed contact to the jerk limit request 175 on the normally open contact. For the two second time interval, the requested deceleration 159 is not used to control the brake operation and instead the jerk limit request 175 controls the brake operation for this two second time period. At the beginning of a speed code change, the jerk limit request 175 operates open loop for a two second interval to control the vehicle brake operation and at the end of that initial two second interval the control switches back to the normal closed loop control in response to the requested deceleration 159 from the speed regulator 42.

The non-linear function generator 177 converts the requested deceleration 159 into the P signal level in accordance with the non-linear relationship shown in Figures 9 and 10. This can comprise several parallel connected operational amplifiers, with the first amplifier biased off until the end of segment one shown in Figure 10 when it starts conducting to provide segment two and then the second amplifier begins to conduct when the input voltage reaches the end of segment two to provide segment three. When the input voltage reaches the end of segment three, then amplifier three conducts to provide segment four. A summing amplifier can be coupled to the outputs of these segment determining amplifiers, and operates for each of the two second interval, the jerk limit and the normal closed loop control operation.

The modified gain change apparatus 179 provides a way to step up and step down the signal gain as may be required for the desired adaptive learning operation. This can include an operational amplifier with a variable potentiometer in its feedbacks and varying that potentiometer in response to a modifier signal 181 to provide the desired signal scaling, with the modifier signal 181 being provided by the adaptive learning apparatus 149 in conjunction with the deceleration error apparatus 153.

The deceleration error apparatus 153 includes a comparator 183 responsive to the requested deceleration 159 from the speed regulator 42 and the track grade 185 to give the normalized deceleration request 187. The comparator 189 is responsive to the actual deceleration 83 from the tachometer 44 and the normalized deceleration request 187 to provide the normalized deceleration error 191, which indicates that the four segment approximation by the nonlinear function generator 177 is not correct enough. The error 191 goes through the integrator 193 to provide a summation over time of the normalized deceleration error 195. The divider 197 operates to divide the sum signal 195 by the time interval of the ramp active 161 to provide the average deceleration error 199 to the sample hold memory 201, which stores this determined average deceleration error 199 to be used to control the next brake operation for the vehicle 50. For the first brake operation of the vehicle the sample hold 201 will contain a zero modifier. During the first stop it will accumulate deceleration error information about how well the brake operation was performed by the approximation of the nonlinear function generator 140, and a modifier 181 will be developed to correct the resulting error. This modifier 181 will then be used on the next brake operation to improve this approximation. After several operations and when the deceleration error becomes substantially zero, the proper modifier will be retained.

For each speed code change the two second enable 143 is provided to the monostable and switch 203 for controlling sample hold 201 to retain the last modifier when the vehicle control apparatus is speed maintaining between speed code changes. For each speed code change brake operation, the modifier 181 from the last such brake operation is utilized to determine the gain of the modified gain change apparatus 179. At the end of each such brake operation, the modifier is updated in relation to the deceleration error 191 resulting therefrom. This corrective improvement of the modifier 181 is successively adapted to provide the desired brake operation response to a sensed speed command code change.

In general, the initial two second operation of the changeover network 141 permits the vehicle to respond to a specific speed code change in accordance with the jerk limit request 175 and ignoring the actual speed feedback from the tachometer 44, because otherwise during this initial two second interval the vehicle cannot respond fast enough to provide valid information trough the tachometer 44 to be of practical benefit and the brake servo will wait before responding to the deceleration request and then will overcompensate by providing too much brake effort. The jerk limiter demand 169 provides a ramp control signal to give an actual deceleration without the nonlinearity problem and with a comfortable brake operation for the passengers. After the initial two second time period, the closed loop control is provided by the changeover network 141 applying the requested deceleration signal 159 through the nonlinear function apparatus 140 to control the vehicle brake operation. The brake system variables, such as errors of load weighing, hot or cold brakes, wet track and so forth, can be corrected by the modifier signal 181. The objective here is to follow the required speed code change as closely as is reasonable and in accordance with the showing of Figures 5B and 6.

0031710
47,683

IDENTIFICATION OF REFERENCE NUMERALS USED IN THE DRAWINGS

| LEGEND | REF. NO. | FIGURE |
|---|---|---|
| $T_N$ | 22 | 1 |
| $R_N$ | 24 | 1 |
| RECEIVER & DECODER | 40 | 2 |
| RECEIVER & DECODER | 40 | 4 |
| RECEIVER & DECODER | 40 | 11 |
| RECEIVER & DECODER | 40 | 17 |
| RECEIVER & DECODER | 40 | 18 |
| ANALOG CONVERTER | 41 | 18 |
| SPEED REGULATOR | 42 | 2 |
| SPEED REGULATOR | 42 | 4 |
| SPEED REGULATOR | 42 | 11 |
| SPEED REGULATOR | 42 | 17 |
| TACHOMETER | 44 | 2 |
| TACHOMETER | 44 | 4 |
| TACHOMETER | 44 | 11 |
| TACHOMETER | 44 | 17 |
| POWER & BRAKE SIGNAL GENERATOR | 46 | 2 |
| POWER & BRAKE SIGNAL GENERATOR | 46 | 4 |
| POWER & BRAKE SIGNAL GENERATOR | 46 | 11 |
| POWER & BRAKE SIGNAL GENERATOR | 46 | 17 |
| POWER & BRAKE SIGNAL GENERATOR | 46 | 18 |
| PROPULSION & BRAKE CONTROL | 48 | 2 |
| PROPULSION & BRAKE CONTROL | 48 | 4 |
| PROPULSION & BRAKE CONTROL | 48 | 11 |
| PROPULSION & BRAKE CONTROL | 48 | 17 |
| PROPULSION & BRAKE CONTROL | 48 | 18 |
| VEHICLE | 50 | 2 |
| VEHICLE | 50 | 4 |
| VEHICLE | 50 | 11 |
| VEHICLE | 50 | 17 |
| VEHICLE | 50 | 18 |
| OVERSPEED CONTROL | 52 | 2 |
| OVERSPEED CONTROL | 52 | 4 |
| OVERSPEED CONTROL | 52 | 11 |

0031710

### IDENTIFICATION OF REFERENCE NUMERALS USED IN THE DRAWINGS

| LEGEND | REF. NO. | FIGURE |
|---|---|---|
| OVERSPEED CONTROL | 52 | 17 |
| OVERSPEED CONTROL | 52 | 18 |
| VITAL SERVICE BRAKE APPARATUS | 55 | 2 |
| EMERGENCY SPRING BRAKE APPARATUS | 59 | 4 |
| EMERGENCY SPRING BRAKE APPARATUS | 59 | 11 |
| EMERGENCY SPRING BRAKE APPARATUS | 59 | 17 |
| EMERGENCY SPRING BRAKE APPARATUS | 59 | 18 |
| RAMP FUNCTION GENERATOR | 92 | 4 |
| RAMP FUNCTION GENERATOR | 92 | 11 |
| RAMP FUNCTION GENERATOR | 92 | 17 |
| RAMP GENERATOR | 92 | 18 |
| NON LINEAR FUNCTION APPARATUS | 140 | 11 |
| NON LINEAR FUNCTION APPARATUS | 140 | 17 |
| CHANGEOVER NETWORK | 141 | 17 |
| CHANGEOVER NETWORK | 141 | 18 |
| ACCELEROMETER | 142 | 11 |
| ACCELEROMETER | 142 | 17 |
| ADAPTIVE LEARNING APPARATUS | 144 | 11 |
| SEQUENCE TIMING & JERK LIMIT CONTROL | 145 | 17 |
| SUMMING AMPLIFIER | 146 | 11 |
| ADAPTIVE LEARNING APPARATUS | 149 | 17 |
| GRADE DETERMINATION APPARATUS | 153 | 17 |
| DIFFERENTIATOR | 163 | 18 |
| LEVEL DETECTOR & HYSTERESIS | 165 | 18 |
| 2 SECOND TIMER | 167 | 18 |
| JERK LIMITED DEMAND | 169 | 18 |
| SUMMING AMPLIFIER | 173 | 18 |
| NON LINEAR FUNCTION GENERATOR | 177 | 18 |
| MODIFIED GAIN CHANGE | 179 | 18 |
| COMPARATOR | 183 | 18 |
| COMPARATOR | 189 | 18 |
| INTEGRATOR | 193 | 18 |
| DIVIDER | 197 | 18 |
| SAMPLE & HOLD MEMORY | 201 | 18 |

0031710

## IDENTIFICATION OF REFERENCE NUMERALS USED IN THE DRAWINGS

| LEGEND | REF. NO. | FIGURE |
|---|---|---|
| MONOSTABLE & SWITCH | 203 | 18 |

24

What we claim is:

1. A control system for a transit vehicle operative with a roadway track for controlling the deceleration of the vehicle in response to a change in an input desired speed signal, comprising:

means coupled with the vehicle for providing an actual speed signal;

means responsive to said change in the desired speed signal for providing a first tractive effort request signal having a predetermined characteristic;

means responsive to the difference between the actual speed signal and the desired speed signal for providing a second tractive effort request signal;

means controlling the deceleration of the vehicle in response to the first tractive effort request signal for a predetermined time period following said change in the desired speed signal and controlling the deceleration of the vehicle in response to the second tractive effort request signal after that predetermined time period.

2. The control system of claim 1, with said predetermined characteristic establishing an open loop brake pressure control operation to decelerate the vehicle.

3. The control system of claim 1, with the first tractive effort request signal providing means being responsive to the actual deceleration of the vehicle for correcting said predetermined characteristic in relation to a desired deceleration of the vehicle.

0031710

4. The control system of claim 1, with the initial predetermined characteristic being established to represent average values of brake pressure needed to provide desired values of vehicle deceleration for at least one transit vehicle operational with the roadway track.

5. The control system of claim 1, with said first tractive effort request signal providing an open loop control of vehicle deceleration and with the second tractive effort request signal providing a closed loop control of vehicle deceleration.

6. The control system of claim 5, with the second tractive effort request signal providing means being responsive to the actual deceleration of the vehicle for modifying the second tractive effort request signal in accordance with a predetermined relationship between the actual deceleration of the vehicle and the desired deceleration of the vehicle.

7. In a deceleration control method for a transit vehicle operative with a roadway track and responsive to a change in the desired speed signal from that roadway track, the steps of:

determining an actual speed signal in accordance with the actual speed of the transit vehicle;

providing a first tractive effort request signal in accordance with a predetermined characteristic;

providing a second tractive effort request signal in accordance with the difference between the actual speed signal and the desired speed signal; and

providing an open loop control of the deceleration of the vehicle in response to the first tractive effort request signal for a predetermined time period after said change in the desired speed signal and providing a closed loop control of the deceleration of the vehicle in response to the second tractive effort request signal after that time period.

0031710

8. The deceleration control method of claim 7, with said predetermined characteristic being determined to provide a desired deceleration of the vehicle after said change indicates a reduction in the desired speed signal from the roadway track.

9. The deceleration control method of claim 7, with the characteristic being corrected in relation to measured actual deceleration of the vehicle in response to the second tractive effort request signal.

10. The deceleration control method of claim 7 with the characteristic being corrected by a relationship between the resulting actual deceleration of the vehicle and the desired deceleration of the vehicle for predetermined values of the second tractive effort request signal.

FIG.1
PRIOR ART

FIG.2
PRIOR ART

FIG.3
PRIOR ART

FIG. 4

PRIOR ART

FIG.5
PRIOR ART

FIG.6
PRIOR ART

FIG.7A
PRIOR ART

FIG.7B
PRIOR ART

FIG.8
PRIOR ART

FIG. 9

FIG. 10

FIG.11

8/11

0031710

FIG.12

FIG.13

FIG.14

FIG.15A

FIG.15B

FIG.16

FIG.17

0031710

FIG. 18

## DOCUMENTS CONSIDERED TO BE RELEVANT

| Category | Citation of document with indication, where appropriate, of relevant passages | Relevant to claim |
|---|---|---|
| A | US - A - 3 384 744 (TOKYO SHIBAURA ELECTRIC CO LTD.)<br>* Column 2, lines 3-21 * | 1,7 |
| A | GB - A - 1 080 800 (GENERAL ELECTRIC COMP.)<br>* Page 1, line 65 to page 2, line 37 * | 1,2,7 |
| A | FR - A - 2 336 273 (JEUMONT SCHNEIDER)<br>* Page 2, lines 18-33; page 8, lines 1-34; figure 2 * | 1,3,7 |
| A | US - A - 3 566 103 (GENERAL SIGNAL CORP.)<br>* Column 1, lines 21-36 * | 1,7 |
| A | FR - A - 1 528 381 (WESTINGHOUSE AIR BRAKE COMP.)<br>* Page 1, left-hand column, line 35 to right-hand column, line 22 * | 1,7 |
| AD | US - A - 3 519 805 (WESTINGHOUSE ELECTRIC CORP.)<br>* Column 1, lines 46-68 * | 1,3,7 |

The present search report has been drawn up for all claims

| Place of search | Date of completion of the search | Examiner |
|---|---|---|
| The Hague | 23-03-1981 | WEIHS |

EPO Form 1503.1  06.78

**CLASSIFICATION OF THE APPLICATION (Int. Cl.³)**

B 61 L  3/00
B 60 L  15/20

**TECHNICAL FIELDS SEARCHED (Int. Cl.³)**

B 61 L  3/00
B 60 L  15/10
　　　　　15/20
　　　　　15/40
G 05 D  13/62

**CATEGORY OF CITED DOCUMENTS**

X. particularly relevant
A: technological background
O: non-written disclosure
P: intermediate document
T: theory or principle underlying the invention
E: conflicting application
D: document cited in the application
L: citation for other reasons

&. member of the same patent family, corresponding document